Europäisches Patentamt

(19) European Patent Office

Office européen des brevets

(11) Publication number: **0 005 583**
**B1**

(12) **EUROPEAN PATENT SPECIFICATION**

(45) Date of publication of patent specification: **30.09.81**

(51) Int. Cl.³: **B 60 N 1/02**

(21) Application number: **79300511.7**

(22) Date of filing: **29.03.79**

(54) Vehicle seat.

(30) Priority: **27.04.78 GB 1664378**

(43) Date of publication of application:
**28.11.79 Bulletin 79/24**

(45) Publication of the grant of the European patent:
**30.09.81 Bulletin 81/39**

(84) Designated Contracting States:
**BE CH DE FR IT NL SE**

(56) References cited:
**DE - A - 2 734 264**
**GB - A - 1 119 902**
**GB - A - 1 362 309**
**GB - A - 1 485 603**

(73) Proprietor: **UOP Inc.**
**10 UOP Plaza Algonquin & Mt. Prospect Roads**
**Des Plaines, Illinois, 60016 (US)**

(72) Inventor: **Lowe, Frederick George**
**7 Porlock Close**
**Northampton Northamptonshire (GB)**
Inventor: **Bollons, Bernard**
**174 Clopton Road**
**Stratford-upon-Avon Warwickshire (GB)**

(74) Representative: **Taylor, Derek George et al,**
**Mathisen, Macara & Co. Lyon House Lyon Road**
**Harrow, Middx. HA1 2ET (GB)**

Courier Press, Leamington Spa, England.

Vehicle seat

This invention relates to a vehicle seat comprising a seat part, a base part, and a suspension resiliently mounting the seat part on the base part for relative upward and downward movement, the suspension including a gas spring, and valve means connecting the interior of the gas spring selectively to a source of compressed gas and to atmosphere.

A seat of this form is known, for example, from British Patent No. 1,119,902. The valve means in this seat could be opened manually to allow compressed air to enter the spring to counterbalance the weight of the seat occupant and to extend the air spring to a selected extent so that the seat occupant is located at the height he chooses. The valve means could also be manually operated to exhaust air from the air spring. Thus by manual operation of a lever the seat could be raised or lowered automatically to a selected or preselected ride height.

It is in the interests of the seat occupant that the seat should operate automatically. If, however, seat adjustment is automatically initiated, for example by switching on the vehicle's ignition circuit, or by a seat-operated switch responsive to load on the seat, and continues while the seat is occupied, movement of the vehicle over rough terrain will produce the same response as repeatedly changing the weight of the seat occupant, and the seat will repeatedly rise and fall.

It is therefore an object of the present invention to provide a vehicle seat with an automatic seat ride adjust facility but which minimises the effect of vehicle vibrations.

This object is achieved in accordance with the invention by the provision of electric circuit means including sensing means for sensing any displacement of the seat part from a selected ride position, means operable in response to said sensing means for actuating the valve means to allow compressed gas to enter or leave the gas spring until the seat has returned to its selected ride position, and activation control means operative normally to maintain the electric circuit means in a de-activated state, the activation control means including means responsive to one or more operator-initiated stimule to activate the electric circuit means for a limited period sufficient to enable the seat to set itself in its selected ride position whereby the time during which vehicle vibration can affect the seat ride position is restricted.

Preferably the seat is provided with height control means operable by manual control to vary the static height of the seat part relative to the base part, the seat including means arranged to generate a said operator-initiated signal in response to manual control operation of the said height control means.

The electric circuit means advantageously includes delay means arranged to delay for a predetermined period de-activation of the electric circuit means following termination of an operator-initiated stimuli or all said operator-initiated stimule.

A vehicle seat embodying the invention will now be particularly described by way of example only with reference to the accompanying drawings in which:

Figure 1 is a diagrammatic section through the vehicle seat incorporating a seat suspension which includes an air spring;

Figure 2 is a diagrammatic representation of the seat, as seen from the front, illustrating the association between the mechanism and operating circuit for controlling the flow of compressed air into and out of the spring, details of the seat suspension having been omitted and the seat part being shown only in ghostline; and

Figure 3 is a diagram of the operating circuit of the seat suspension.

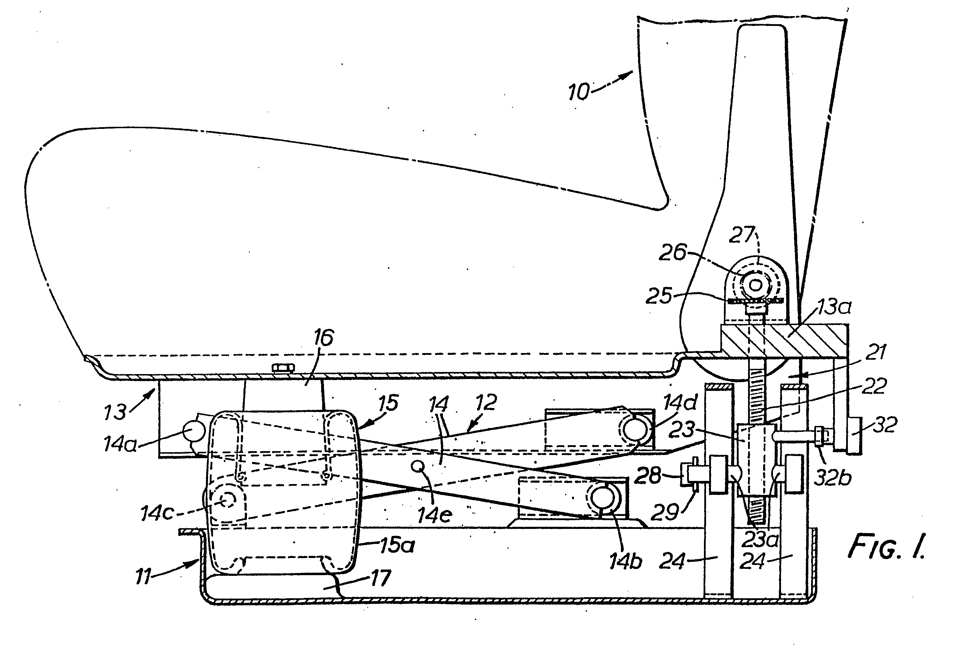

As shown in Figure 1, the vehicle seat comprises a seat part 10 mounted on a base part 11 via a spring suspension 12. The spring suspension comprises a seat support 13 on which the seat part 10 is mounted, two pairs of scissor arms 14 located in laterally-spaced vertical planes (only one pair shown) one arm of each pair having a pivotal connection 14a at one end to the seat support and a sliding or rolling connection 14b at the other end to the base part, the other arm of each pair having pivotal connection 14c to the base part and a sliding or rolling connection 14d to the seat support. The arms are pivotally interconnected at their intersection 14e. This system of pivoted linkages maintains the seat part horizontal as it rises and falls relative to the base part. Details of a seat of this type are described in our British Patent Specification No. 957,332.

In addition an air spring 15 is connected between the base part 11 and the seat support 13, the air spring consisting of a tubular rubber envelope 15a the ends of which have been folded inwardly and each secured around the rim of upper and lower support members 16, 17 fixed respectively to the seat support and the base part. The upper member 16 is cup-shaped, the outer surface of member 16 providing a support for the rolling lobe of the tubular envelope as the seat support rises and falls.

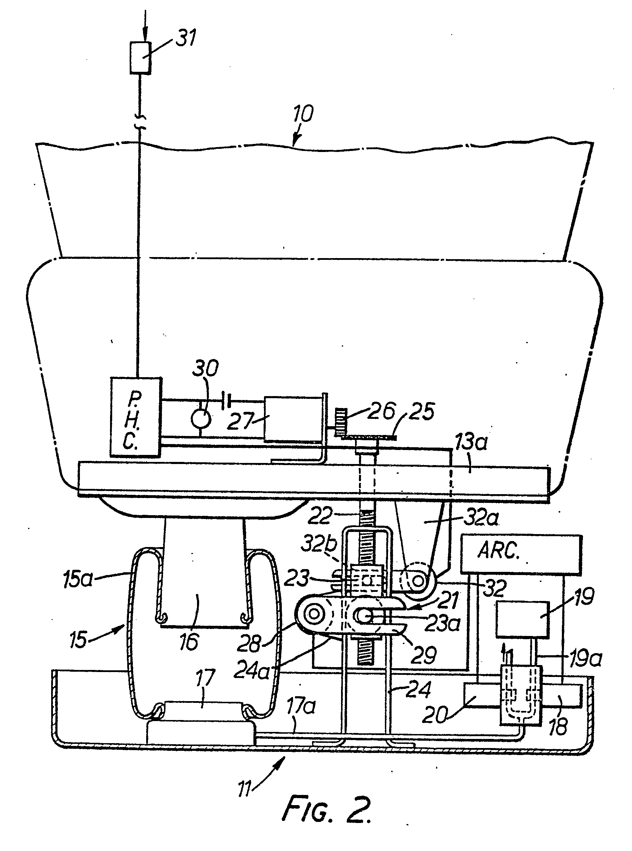

A source 19 of compressed air or other gas (Fig. 2), which can conveniently comprise a reservoir of compressed air supplied by an electrically driven compressor, is connected via an air line 19a to a solenoid operated inlet valve 18 which in turn is connected to the interior of the gas spring 15 via a combined inlet and outlet pipe 17a extending through the lower support member 17. The pipe 17a is also connected to atmosphere through a solenoid-operated outlet valve 20.

Connected between the base part and the seat support is a position-responsive device 21 comprising a lead screw 22 extending vertically and journalled at its upper end in a trunnion 13a on the seat support 13 for rotation about its longitudinal axis, for a purpose to be described hereinafter. The lead screw 22 supports a nut 23 which is anchored against rotation by engagement in a guide formed by a vertically-extending oppositely-facing U-section guide 24. The nut 23 can, however, rise or fall by sliding within the guide as the seat part 10 rises or falls relative to the base part.

The vertical distance of the nut 23 from a selected height is sensed by a potentiometer 28 supported on an arm 24a secured to the guide 24 and thus mounted on the base part 11. The potentiometer 28 is a rotary device of which the rotor has a radial arm 29 forked to engage around a pine 23a extending horizontally from the nut 23. The upward and downward movement of the nut 23 in correspondence to vertical movement of the seat part 11 causes the arm 29 to rise pivotally above or fall below the selected height, referred to as the mid-ride position for the seat part 10, and this pivotal movement of the arm varies the resistance of the potentiometer. Consequently, the potentiometer is effective to sense the position of the seat part 10 relative to its normal mid-ride position. This mid-ride position is usually arranged to be midway between UP and DOWN stop positions of the seat and in this position the arm 29 is horizontal, as illustrated. The potentiometer 28 is connected into an automatic ride control circuit A.R.C. which will cause air to enter or leave the air spring to bring the seat back to its mid-ride position in which the radial arm 29 is horizontal.

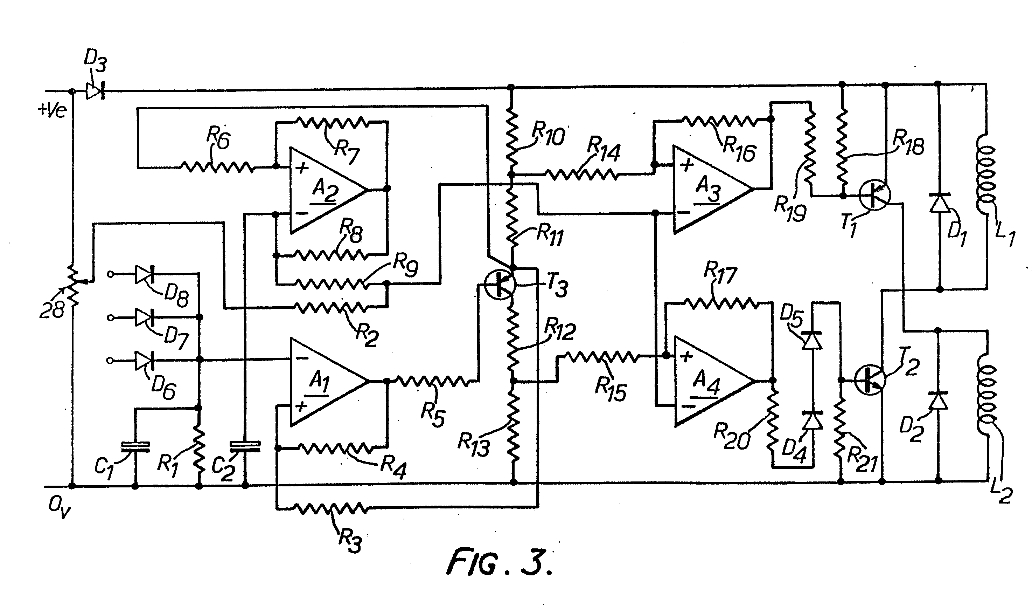

The automatic ride control circuit of the seat suspension is illustrated in Figure 3. As shown, the circuit comprises the solenoids $L_1$ and $L_2$ of the air spring solenoid valves 18 and 20. The solenoids $L_1$ and $L_2$ are respectively connected into the collector circuits of transistors $T_2$ and $T_1$. The transistors $T_2$ and $T_1$ are respectively driven by the outputs of operational amplifiers $A_4$ and $A_3$. When the output of the amplifier $A_4$ is high, the transistor $T_2$ is turned on and the solenoid $L_1$ is energised, whereas when the output of the amplifier $A_4$ is low the transistor $T_2$ is cut off and solenoid $L_1$ is de-energised. Conversely, high and low outputs from the amplifier $A_3$ respectively de-energise and energise the solenoid $L_2$. Both solenoids $L_1$ and $L_2$ will be de-energised when the output of the amplifier $A_3$ is low and that of the amplifier $A_3$ is high.

The amplifiers $A_3$ and $A_4$ are configured as fixed gain trigger amplifiers and are respectively provided with feedback resistors $R_{16}$ and $R_{17}$ and input resistors $R_{14}$ and $R_{15}$. A common signal input to the amplifiers $A_3$ and $A_4$ is derived via a resistor $R_2$ from the slider of the potentiometer 28 and is fed to the inverting inputs of the amplifier $A_3$ and $A_4$.

Current flow through a resistance chain formed by the resistors $R_{10}$ to $R_{13}$ generates first and second threshold voltage levels which are fed to the non-inverting inputs of the amplifiers $A_4$ and $A_3$ respectively. The second threshold voltage level is made greater than the first threshold voltage level. Current flow through the resistance chain $R_{10}$ to $R_{13}$ can be controlled on and off by a transistor $T_3$ for a purpose to be described hereinafter; during ride control transistor $T_3$ is turned on thereby enabling generation of the threshold voltages.

When the common signal input to the amplifier $A_3$ and $A_4$ is at a voltage level intermediate the first and second threshold voltage levels, the outputs of the amplifiers $A_4$ and $A_3$ will respectively be low and high with the result that both the solenoids $L_1$ and $L_2$ are de-energised. Should the common signal input voltage level fall below the first threshold level, the output of the amplifier $A_4$ will become high causing the solenoid $L_1$ to be energised; if the common signal input voltage rises above the second threshold level the output of the amplifier $A_3$ will become low causing the solenoid $L_2$ to be energised.

In addition to the signal derived from the potentiometer 28, a triangular waveform voltage is also fed via a resistor $R_2$ to the coupled inverting inputs of the amplifiers $A_3$ and $A_4$. This triangular waveform is generated by an operational amplifier $A_2$ connected with the resistors $R_7$ and $R_8$ and with the capacitor $C_2$ to form a multivibrator of standard configuration. The triangular waveform is effectively summed with the signal from the potentiometer 28 at the inverting inputs to the amplifiers $A_3$ and $A_4$ to produce a common signal input of triangular form with a mean value dependent on the potentiometer signal.

The first and second threshold voltage levels and the peak-to-peak voltage of the triangular waveform are set such that in the mid-ride position for the seat (the slider of the potentiometer 28 positioned at the centre of its travel), the mean value of the common signal input lies midway between the threshold levels and the positive and negative voltage excursions of the common signal input caused by the triangular waveform do not quite exceed the second and first threshold levels respectively.

In operation of the circuit, displacements of the seat from its mid-ride position will cause corresponding variations in the mean value of the common signal input fed to the amplifiers $A_3$ and $A_4$ resulting in either the first or second threshold voltage levels being exceeded by the negative or positive excursions of the common signal input according to the direction of displacement of the seat. As a result, the corresponding solenoid $L_1$ or $L_2$ is pulsatingly energised thus either admitting air to, or releasing air from, the air spring to restore the seat to its mid-ride position. The control effected by the circuitry is a proportional one (that is, the duty cycle of the energised solenoid is proportional to the magnitude of seat displacement from its mid-ride position) until the seat displacement is sufficiently large to cause the value of the common signal input to the amplifiers $A_3$ and $A_4$ to exceed continuously either the first or second threshold level respectively. In this case, the corresponding solenoid valve 18 or 20 will be continuously energised until the seat is restored to a position where the threshold level is only intermittently exceeded.

The rate of pulsing of the solenoids $L_1$ and $L_2$ can be adjusted for optimum performance by adjusting the values of resistor $R_8$ and/or capacitor $C_2$ to adjust the frequency of the triangular waveform generated.

A diode $D_3$ is provided to protect the circuit against reverse polarity connection of the supply. Diodes $D_1$ and $D_2$ are provided to suppress back e.m.f.s. across the solenoids $L_1$ and $L_2$ on switch-off of the circuit supply. Diodes $D_4$ and $D_5$ are provided to ensure that transistor $T_2$ is completely off when the output of the amplifier $A_3$ is low.

In order to allow the seat occupant to select the height of the mid-ride position of the seat, the nut 23 is arranged to be adjustable in position towards and away from the seat part 10. Adjustment of the position of the nut 23 is effected by means of an electric motor 27 provided with a pinion 26 arranged to rotate the lead screw 22 by engagement with a gear wheel 25 mounted on the upper end of the lead screw 22. Since the ride control circuit will control the air spring 15 to maintain the radial arm 29 in a particular datum position (for example, horizontal), vertical adjustment of the nut 23 is effective to alter the seat height corresponding to the datum position of the arm 29, and therefore to alter the mid-ride position of the seat.

The energisation of the motor 27 from the vehicle battery can be simply controlled by a control and reversing switch 30 mounted for example on the seat part, and by means of which the seat occupant can select the desired midride position. Thus, if the seat occupant wishes to raise or lower his mid-ride position, he will do so by operating the switch 30 to energise the motor 27 in one or other direction and raise or lower the nut 23 relative to the base part. This will have the effect of moving the potentiometer 28 away from its mid-position and will cause one of the air valves 18, 20 to be actuated under the control of the ride control circuit to bring the seat to its new mid-ride position.

From the foregoing, it can be seen that the automatic ride-control circuit is effective to maintain the seat at a mid-ride position in which the weight of the seat occupant is balanced and the seat occupant is maintained at a height which he can select.

In order to prevent vibration of the seat, e.g. resulting from the passage of the vehicle over rough terrain, from causing the ride control circuit constantly to actuate the inlet and outlet valves 18 and 20 of the air spring 15, an activation control circuit is incorporated into the ride control circuit to de-activate the ride control circuit after a delay period from the last operation of the control switch energising the motor 27 to set the ride position. This delay period is, for example, three seconds or such other time as will be sufficient to allow the ride control circuit to 'weigh' the seat occupant and raise or lower the seat to the desired ride position. The ride control circuit will however be re-activated in response to operation of the motor control switch 30 and will thereafter be de-activated again under the control of the activation control circuit.

The activation control circuit comprises the transistor $T_3$ which is controlled via a resistor $R_5$, by the output of an operational amplifier $A_1$. The amplifier $A_1$ has a feedback resistor $R_4$ and is supplied of its non-inverting input with a reference voltage derived via resistor $R_3$ from the resistance chain $R_{10}$ to $R_{13}$. The inverting input of the amplifier $A_1$ is connected to a delay circuit formed by capacitor $C_1$ and resistor $R_1$ which can be fed with an input signal through any one of the input diodes $D_6$ to $D_8$.

Diodes $D_6$ and $D_7$ are connected to the motor control switch 30 so that energisation of the motor 27 will cause one or other of the diodes $D_6$ or $D_7$ to be connected to the positive supply rail. Such a connection will result in the capacitor $C_1$ immediately charging up to the positive supply rail potential where it is held during motor energisation. With the capacitor $C_1$ charged to the positive supply rail potential, the output of the amplifier $A_1$ is low which causes transistors $T_3$ to be switched hard on and as a result current flows through the resistance chain $R_{10}$ to $R_{13}$ and the ride control circuit is operative to control the air spring 13 appropriately. Following the de-energisation of the motor 27 and thus disconnection of the capacitor $C_1$ from the positive supply rail, the capacitor will discharge slowly through the resistor $R_1$ and at a predetermined voltage the output of the amplifier $A_1$ will become high switching off the transistor $T_3$ and setting the reference inputs to the amplifiers $A_3$ and $A_4$ respectively to the positive rail potential and to ground. The amplifiers $A_3$ and $A_4$ are thus set into states in which the solenoids $L_1$ and $L_2$ will remain de-energised regardless of the input from the potentiometer 28; the ride control circuit is therefore de-activated. The time for the amplifier $A_1$ to change its output state after disconnection of the capacitor $C_1$ from the positive supply rail determines the de-activation delay of the ride control circuit.

Diode $D_8$ can be connected to the vehicle ignition starter switch such that upon switching on of the starter, the diode $D_8$ is momentarily connected to the positive supply rail. This will result in the ride control circuit ensuring that the seat is set at its last mid-ride position.

A further input diode may be provided which is connected to an electrical switch positioned in the seat part 10 and arranged to connect the diode to the positive supply rail upon the seat becoming unoccupied. With such an arrangement, the seat will be maintained in position upon vacation by the occupant.

A further input diode may be connected via a dashboard-mounted momentarily-operable switch to the positive supply rail thereby rendering the ride control circuit active to enable the seat occupant to reposition the seat to the desired ride position at any selected moment. Alternatively the switch could be an ON—OFF switch by operation of which the ride control circuit could be maintained in continuous operation.

From the foregoing, it can be seen that the ride control circuit is arranged to be activated only during the presence of one or more operator-initiated signals fed to the activation control circuit via respective input diodes, the ride control circuit being subsequently de-activated after a predetermined time delay upon termination of the or all of the operator-initiated signals.

In addition to, or in substitution for, the motor control switch 30 a preselected height control servo ('P.H.C.' in Figure 2) can be provided in which the seat occupant sets the slider on an input potentiometer 31 (mounted, for example, on the dashboard) to a position corresponding to a desired seat ride height, the servo being operative to energise the motor 27 to adjust the nut 23 to a position corresponding to the desired seat ride height. The position of the nut 23 is sensed by a feedback potentiometer 32 mounted on a support 32a rigid with trunnion 13a and adjustable by a coupling 32b connecting it to the nut (such as a radial arm and pin coupling operable in the manner of forked radial arm 29 and pin 23a). The circuit P.H.C. which connects potentiometer 31 and 32 to control motor 27 is a known circuit which forms no part of the present invention.

Preferably, for the sake of technical simplicity, a straight forward bang-bang servo with a suitable dead band region can be used, the motor 27 then being arranged to be connected across the supply rails in the appropriate sense or to be de-energised. Such an arrangement is compatible with the activation control circuit of the ride-control circuit as the diodes $D_6$ and $D_7$ can simply be connected to respective sides of the motor 27 thereby causing the ride-control circuit to be held activated during adjustment of the height of the nut 23 by the motor 27 and then, following de-energisation of the motor 27, to remain activated for a further period during which the air spring 15 is positioned appropriately.

## Claims

1. A vehicle seat comprising a seat part (10), a base part (11), and a suspension (12) resiliently mounting the seat part (10) on the base part (11) for relative upward and downward movement, the suspension (12) including a gas spring (15), and valve means (18, 20) connecting the interior of the gas spring (15) selectively to a source of compressed gas and to atmosphere, characterised by electric circuit means (A.R.C.) including sensing means (28, 29) for sensing any displacement of the seat part (10) from a selected ride position, means $(A_3, A_4, T_1, T_2)$ operable in response to said sensing means (28, 29) for actuating the valve means (18, 20) to allow compressed gas to enter or leave the gas spring (15) until the seat has returned to its selected ride position, and activation control means $(A_1, T_3)$ operative normally to maintain the electric circuit means (A.R.C.) in a de-activated state, the activation control means $(A_1, T_3)$ including means responsive to one or more operator-initiated stimuli to activate the electric circuit means (A.R.C.) for a limited period sufficient to enable the seat to set itself in its selected ride position.

2. A vehicle seat according to claim 1, characterised by height control means (P.H.C.) operable by manual control to vary the static height of the seat part (10) relative to the base part (11), the said means responsive to operator-initiated stimuli being arranged to respond to manual control operation of the said height control means (P.H.C.) to activate the electric circuit means (A.R.C.).

3. A vehicle seat according to claim 1 or claim 2, characterised in that the activation control means $(A_1, T_3)$ includes delay means $(R_1, C_1)$ arranged to delay for predetermined period de-activation of the electric circuit means (A.R.C.) following termination of an operator-initiated stimulus or all said operator initiated stimuli.

## Patentansprüche

1. Fahrzeugsitz, bestehend aus einem Sitzteil (10), einem Basisteil (11) und einer den Sitzteil (10) für relative Auf- und Abwärtsbewegungen nachgiebig auf dem Basisteil (11) lagernden Abstützung (12), wobei die Abstützung (12) eine Gasfeder (15) und das Innere der Gasfeder (15) wahlweise mit einer Quelle eines komprimierten Gases oder der Atmosphäre verbindende Ventilmittel (18, 20) aufweist, gekennzeichnet durch elektrische Schaltkreismittel (A.R.C.) mit Fühlmitteln (28, 29) zum Erfassen einer Versetzung des Sitzteiles (10) aus einer vorgewählten Sitzposition, ferner mit in Abhängigkeit von den Fühlmitteln (28, 29) betätigbaren Mitteln $(A_3, A_4, T_1, T_2)$ zum betä-

tigen der Ventilmittel (18, 20), um komprimiertes Gas in die Gasfeder (15) eintreten oder aus ihr austreten zu lassen, bis der Sitzteil (10) in die vorgewählte Siztposition zurückgekehrt ist, sowie mit Betätigungssteuermitteln $(A_1, T_3)$, mit denen die elektrischen Schaltkreismittel (A.R.C.) in einem nicht aktiven Zustand haltbar sind, wobei die Betätigungssteuermittel $(A_1, T_3)$ Mittel aufweisen, die auf einen oder mehrere von einer Bedienungsperson veranlaßte Anregungsimpulse ansprechen und die elektrischen Schaltkreismittel (A.R.C.) über eine begrenzte Zeitspanne aktivieren, welche ausreicht, um den Sitz selbsttätig in seine vorgewählte Sitzposition einzustellen.

2. Fahrzeugsitz nach Anspruch 1, gekennzeichnet durch Höhensteuermittel (P.H.C.), die durch eine Handsteuerung betätigbar sind, um die statische Höhe des Sitzteiles (10) relativ zum Basisteil (11) zu variieren, wobei die Mittel auf die von der Bedienungsperson veranlaßten Anregungsimpulse ansprechen und so angeordnet sind, daß sie auf die Handsteuerbetätigung der Höhensteuermittel (P.H.C.) ansprechen, um die elektrischen Schaltkreismittel (A.R.C.) zu aktivieren.

3. Fahrzeugsitz nach Anspruch 1 oder Anspruch 2, dadurch gekennzeichnet, daß die Betätigungssteuermittel $(A_1, T_3)$ Verzögerungsmittel $(R_1, C_1)$ aufweisen, die so angeordnet sind, daß sie über eine vorbestimmte Zeitspanne die Deaktivierung der elektrischen Schaltkreismittel (A.R.C.) nach der Beendigung eines von der Bedienungsperson veranlaßten Anregungsimpulses oder aller von der Bedienungsperson veranlaßten Anregungsimpulse verzögern.

**Revendications**

1. Siège pour véhicule, comprenant une partie (10) formant siège, une partie (11) de base, et une suspension (12) assurant le montage élastique de la partie (10) formant siège sur la partie (11) de base afin que ces deux parties puissent avoir un déplacement relatif vers le bas et vers le haut, la suspension (12) comprenant un ressort pneumatique (15) et un dispositif à vanne (18, 20) reliant sélectivement l'intérieur de ressort pneumatique (15) à une réserve de gaz comprimé et à l'atmosphère, caractérisé par un circuit électrique (A.R.C.) comprenant un dispositif (28, 29) de détection de tout déplacement de la partie (10) formant siège par rapport à une position choisie de conduite, un dispositif $(A_3, A_4, T_1, T_2)$ fonctionnant sous la commande du dispositif de détection (28, 29) et destiné à mettre en action le dispositif à vanne (18, 20) afin que du gaz comprimé puisse pénétrer dans le ressort pneumatique (15) ou quitter celui-ci jusqu'à ce que le siège ait repris sa position choisie de conduite, et une commande d'activation $(T_1, T_3)$ destinée à maintenir normalement le circuit électrique (A.R.C.) à l'état désexcité, la commande d'activation $(A_1, T_3)$ comprenant un dispositif commandé par un ou plusieurs stimule déclenchés par l'opérateur et destiné à exciter le circuit électrique (A.R.C.) pendant une période limitée qui suffit pour que le siège puisse se régler lui-même dans sa position choisie de conduite.

2. Siège pour véhicule selon la revendication 1, caractérisé par un dispositif de réglage de hauteur (P.H.C.) fonctionnant d'après une commande manuelle et destiné à faire varier le hauteur statique de la partie (10) formant siège par rapport à la partie (11) de base, le dispositif commandé par un stimulus déclenché par l'opérateur étant réalisé afin qu'il réponde au fonctionnement de la commande manuelle du dispositif de réglage de hauteur (P.H.C.) par l'activation du circuit électrique (A.R.C.).

3. Siège pour véhicule selon l'une des revendications 1 et 2, caractérisé en ce que la commande d'activation $(A_1, T_3)$ comprend un dispositif à retard $(R_1, C_1)$ destiné à retarder pendant une période prédéterminée la désactivation du circuit électrique (A.R.C.) après la fin d'un stimulus déclenché par l'opérateur ou de tous les stimuli déclenchés par un opérateur.

FIG. I.

FIG. 2.

FIG. 3.